# FASCICULE DE BREVET EUROPEEN

(11) **EP 4 201 819 B1**
(45) Date de publication et mention de la délivrance du brevet: **23.04.2025**
(21) Numéro de dépôt: 22215632.5
(22) Date de dépôt: 21.12.2022
(51) Int. Cl.: B64G 1/10, B64G 1/50, B64G 1/66, H01Q 1/28, H01Q 1/08, H01Q 21/00, H01Q 21/06

(54) **SATELLITE COMPRENANT UNE ANTENNE RAYONNANTE DEPLOYABLE**
SATELLIT MIT AUSFAHRBARER ANTENNE
SATELLITE COMPRISING A DEPLOYABLE RADIATING ANTENNA

(30) Priorité: 23.12.2021 FR 2114413
(43) Date de publication de la demande: 28.06.2023
(73) Titulaire: THALES, 92190 Meudon (FR)
(72) Inventeur: DELMAS, Anthony, 12000 RODEZ (FR); CHAIX, Alain, 06156 CANNES LA BOCCA Cedex (FR); FRAYSSE, Jean-Philippe, 31200 TOULOUSE (FR); VEZAIN, Stéphane, 06156 CANNES LA BOCCA Cedex (FR)
(74) Mandataire: Atout PI Laplace

(56) Documents cités:
- US-A- 6 003 817
- US-A1- 2004 040 691
- US-A1- 2021 276 736
- US-A1- 2021 318 074
- US-B1- 7 551 136

## Description

### DOMAINE TECHNIQUE

L'invention concerne des satellites comprenant une antenne rayonnante et, en particulier, une antenne rayonnante comprenant une boucle diphasique.

### ARRIÈRE-PLAN

Les antennes rayonnantes à balayage, souvent appelées antennes actives pour applications spatiales comprennent en général quelques dizaines ou quelques centaines d'éléments rayonnants associés à des amplificateurs et ont des surfaces de moins de un mètre carré. Ces antennes rayonnantes actives peuvent être assemblées facilement sur Terre avant d'être transportées vers l'espace. Ces antennes rayonnantes sont également facilement transportables à bord de fusées et ou navettes spatiales. De plus, lors de l'utilisation, une partie de la puissance consommée par les amplificateurs et éléments rayonnants est dissipée sous forme de chaleur qu'il est nécessaire d'évacuer par exemple par systèmes de contrôle thermique basés sur l'utilisation de composants fluidiques passifs (tels que des caloducs ou des boucles à pompage capillaire). Pour évacuer la chaleur, ces antennes nécessitent une proximité entre les amplificateurs et des radiateurs. Cependant, pour des satellites ayant des applications en télécommunication, afin d'assurer des hauts débits et ultra hauts débits, les antennes actives requièrent une large surface et nécessitent une consommation de fortes puissances, engendrant ainsi une dissipation de fortes puissances. Ainsi, pour des applications nécessitant des antennes ayant une surface plus grande (par exemple, supérieure à 8 m²) et de nombreux éléments rayonnants (par exemple, plusieurs milliers), les systèmes connus comprenant des antennes rayonnantes ne permettent pas de garantir une température homogène sur toute leur surface lorsque la puissance émise est importante. De plus, les antennes de large surface et comprenant de nombreux éléments rayonnants sont difficilement transportables à bord de fusées et ou navettes spatiales, difficilement assemblables et dissipent de forte puissances (par exemple supérieure à 10 kW) qui ne peuvent pas être récupérés par les systèmes de contrôle thermique actuels.

Enfin, la notion d'homogénéité en température entre les différents éléments rayonnants est un paramètre clé pour garantir la performance radiofréquence de systèmes comprenant des antennes rayonnantes. Un gradient de 5 à 10°C permet de garantir cette performance.
US 2021/318074 A1 concerne un ensemble panneau destiné à être utilisé avec un engin spatial qui comprend une charge utile, un panneau de radiateur et un caloduc. La charge utile est configurée pour générer de la chaleur perdue pendant un fonctionnement. Le panneau de radiateur est espacé de la charge utile et est configuré pour dissiper de la chaleur perdue. Le caloduc est accouplé à la charge utile et au panneau de radiateur. Le caloduc comprend une partie souple pour permettre au panneau de radiateur de se déplacer par rapport à la charge utile. En outre, le caloduc est configuré pour transférer de la chaleur perdue de la charge utile au panneau de radiateur
US 6003817 A concernce des panneaux thermiques pouvant être déployés sont commandés de manière active tout au long de l'orbite d'un satellite afin d'assurer la dissipation thermique. Par ajustement de l'angle d'incidence des rayons solaires sur le panneau et par commande de l'écoulement d'un fluide dans des tubes souples de transport de chaleur, on charge et on décharge de la chaleur de manière à assurer la stabilité thermique de composants qui présentent des exigences spéciales du point de vue thermique. Un panneau d'antenne facultatif se trouvant sur le côté nadir du satellite présente un côté antenne de transmission sur une surface et un côté de rayonnement thermique sur la surface opposée. De plus, les déplacements des panneaux thermiques sont commandés de façon que soient produits des couples s'opposant aux couples perturbateurs.

### RÉSUMÉ

Afin de pallier les inconvénients des satellites comprenant des antennes rayonnantes de grandes surfaces (par exemple, supérieure à 8 m²) et ayant de nombreux éléments rayonnants (par exemple, plusieurs milliers), l'invention propose un satellite comprenant une antenne rayonnante comprenant un panneau fixe et au moins un panneau déployable et une boucle diphasique comprenant des raccordements flexibles.

A cet effet, l'invention a pour objet un satellite pouvant être assemblé et transporté, même lorsque l'antenne rayonnante a une grande surface et une forte puissance. De plus, la boucle diphasique permet de récupérer la chaleur émise par de nombreux éléments rayonnants.

L'invention vient à améliorer la situation en proposant un satellite comprenant : un châssis, une antenne rayonnante comprenant : des éléments rayonnants ; des amplificateurs associés aux éléments rayonnants, une embase sur laquelle les éléments rayonnants et les amplificateurs sont montés, l'embase étant configurée pour porter les éléments rayonnants et les amplificateurs et pour évacuer de la chaleur émise par les éléments rayonnants et/ou les amplificateurs lorsqu'ils sont en fonctionnement, l'embase comprenant au moins un panneau fixe fixé au châssis et au moins un panneau déployable articulé au premier panneau, chacun des panneaux portant au moins un des éléments rayonnants ; et une boucle diphasique dans laquelle circule un fluide et configurée pour récupérer la chaleur et transmise à l'embase, la boucle diphasique comprenant : deux portions, chacune fixée à l'un des deux panneaux de l'embase ; et des raccordements flexibles comprenant au moins un canal thermique flexible et connectant les portions de la boucle diphasique, le fluide circulant dans le au moins un canal thermique flexible.

Dans un mode de réalisation, le panneau déployable est configuré pour avoir une position déployée lorsque le satellite est en service et une position repliée lorsque le satellite est en transport.

Dans un mode de réalisation, la boucle diphasique comprend une pompe configurée pour faire circuler le fluide avec un débit supérieur à une valeur prédéterminée et un état diphasique dans chaque panneau et au moins un condenseur configuré pour évacuer de la chaleur du fluide.

Dans un mode de réalisation, l'antenne rayonnante a une surface allant de 8 m² à 20 m².

Dans un mode de réalisation, le fluide est un fluide caloporteur configuré pour une utilisation à l'état liquide et à l'état diphasique.

Dans un mode de réalisation, le fluide caloporteur est de l'ammoniac.

Dans un mode de réalisation, les raccordements flexibles comprennent des canaux configurés pour transmettre des signaux véhiculant une onde électromagnétique émise et/ou reçue par les éléments rayonnants.

### BRÈVE DESCRIPTION DES DESSINS

L'invention sera mieux comprise et d'autres avantages apparaîtront à la lecture de la description qui va suivre donnée à titre non limitatif et grâce aux figures parmi lesquelles :
La figure 1 illustre un exemple de satellite comprenant une antenne rayonnante en position déployée vu de profil ;
La figure 2 illustre un exemple de satellite comprenant une antenne rayonnante en position repliée vu de profil ;
La figure 3 illustre un exemple d'antenne rayonnante en position déployée vu de dessus ; et
La figure 4 illustre un autre exemple d'antenne rayonnante en position déployée vu de dessus.

### DESCRIPTION DÉTAILLÉE

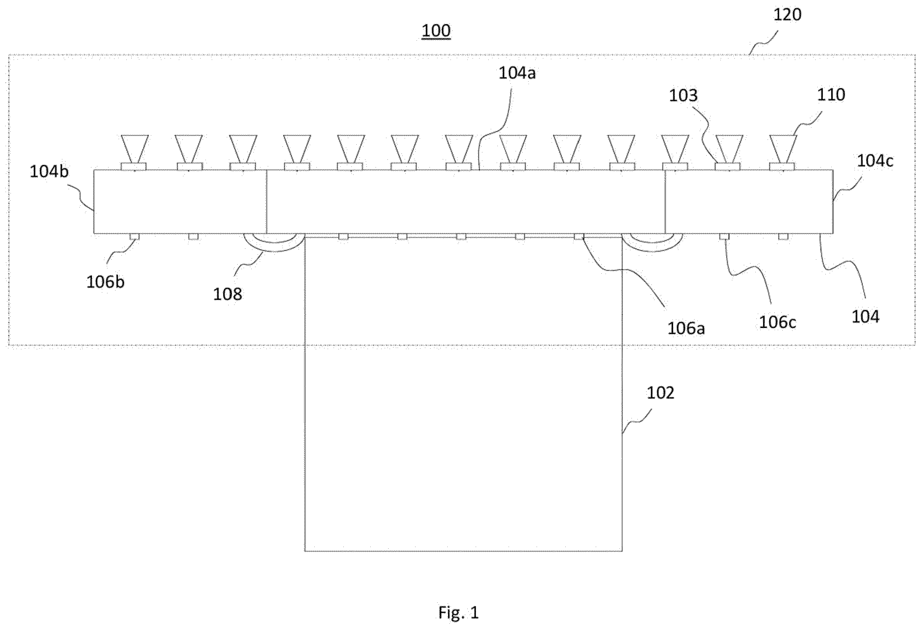

La figure 1 illustre un exemple de satellite 100 vu de profil. Le satellite comprend un châssis 102 et une antenne rayonnante 120. L'antenne rayonnante comprend des éléments rayonnants 110. Par exemple, les éléments rayonnants 110 peuvent être des antennes cornets permettant la réception de signaux terrestres ou la transmission de signaux vers la Terre. Les éléments rayonnants sont associés à des amplificateurs 103 permettant d'amplifier les signaux reçus et/ou transmis par les éléments rayonnants 110. Par exemple, chacun des éléments rayonnants 110 peut être associé à un amplificateur 103.

De plus, l'antenne rayonnante comprend une embase 104 sur laquelle les éléments rayonnants 110 et les amplificateurs 103 sont montés. L'embase 104 est configurée pour porter les éléments rayonnants 110 et pour évacuer de la chaleur émise par les éléments rayonnants 110 et/ou les amplificateurs 103 lorsqu'ils sont en fonctionnement. L'embase 104 comprend au moins un panneau fixe 104a fixé au châssis et au moins un panneau déployable 104b, 104c articulé au panneau fixe 104a, chacun des panneaux portant au moins un des éléments rayonnants 110 et l'amplificateur 103 associé. Dans l'exemple illustré dans la figure 1, l'antenne rayonnante comprend deux panneaux déployables 104b, 104c, chacun étant articulé au panneau fixe 104a. Dans un autre exemple, l'antenne rayonnante peut comprendre un seul panneau déployable.

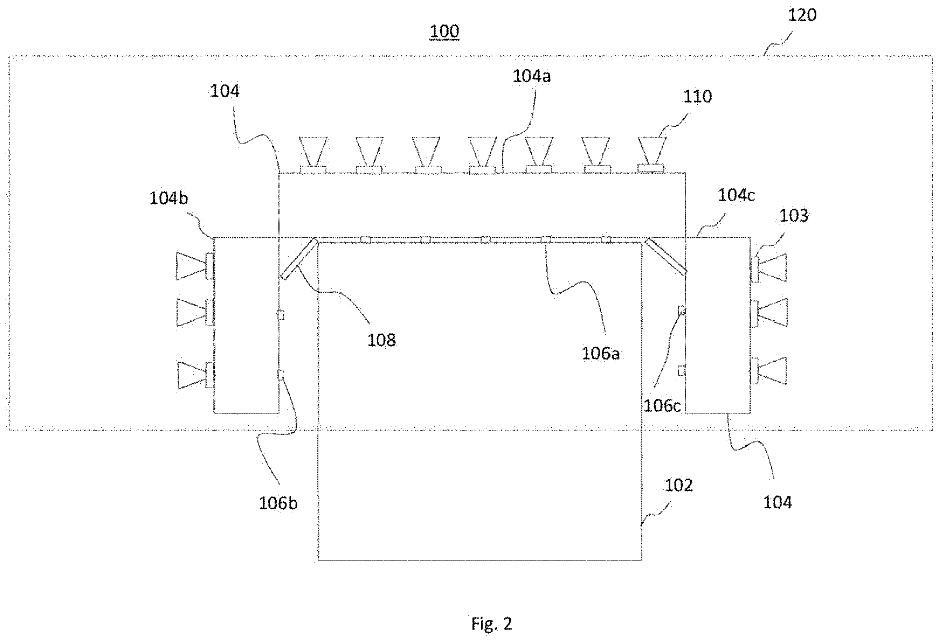

Dans la figure 1, les panneaux déployables 104b, 104c ont une position déployée. La figure 2 illustre le satellite 100 vu de profil, panneaux déployables 104b, 104c ayant une position repliée. En effet, les panneaux déployables 104b, 104c sont configurés pour avoir une position déployée qui peut être utilisée lorsque le satellite 100 est en service et une position repliée lorsque le satellite 100 est en transport. La position repliée permet, dans le cas des antennes rayonnantes de grande taille (par exemple, ayant une surface supérieure à 8 m²) de faciliter le transport du satellite à bord des fusées et ou navettes spatiales en optimisant l'espace nécessaire pour le transport. Dans un exemple, un seul des deux panneaux déployables 104b, 104c peut être en position déployée lorsque le satellite est utilisé. Le châssis peut comprendre des mécanismes de fixation articulés entre les panneaux déployables et le panneau fixe, permettant aux panneaux déployables de passer de la position repliée à déployée.

De plus, l'antenne rayonnante 120 comprend une boucle diphasique 106 dans laquelle circule un fluide caloporteur. Le fluide peut être par exemple de l'ammoniac pentafluoropropane ou tetrafluoroethane (type « fréon », produits vendus par la société DuPont de Nemours). La boucle diphasique 106 est configurée pour récupérer la chaleur émise par les éléments rayonnants 110 et/ou les amplificateurs 103 et transmise à l'embase 104. Dans un exemple, la boucle diphasique 106 peut être configurée pour récupérer la chaleur émise également par des amplificateurs et transmise à l'embase 104. Dans l'exemple de la figure 1, la boucle diphasique 106 comprend trois portions 106a, 106b, 106c, chacune fixée à l'un des trois panneaux 104a, 104b, 104c de l'embase 104. De plus, la boucle diphasique 106 comprend des raccordements flexibles 108 comprenant au moins un canal thermique flexible et connectant les trois portions 106a, 106b, 106c de la boucle diphasique 106, le fluide circulant dans le canal thermique flexible. En particulier, les raccordements flexibles 108 connectent la portion de la boucle diphasique 106 fixée sur le premier panneau déployable 104b avec la portion de la boucle diphasique 106 fixée sur le panneau fixe 104a. De même, des raccordements flexibles 108 connectent la portion de la boucle diphasique 106 fixée sur le deuxième panneau déployable 104c avec la portion de la boucle diphasique 106 fixée sur le panneau fixe 104a. Dans un autre exemple, l'antenne rayonnante 120 peut comprendre un seul panneau déployable. Ainsi, la boucle diphasique 106 peut comprendre seulement deux portions, chacune fixée à l'un des deux panneaux de l'embase 104 (c'est-à-dire le panneau déployable et le panneau fixe 104a) et les raccordements flexibles connectent la portion de la boucle diphasique 106 fixée sur le panneau déployable avec la portion de la boucle diphasique 106 fixée sur le panneau fixe 104a. De façon plus générale, comprend autant de panneaux déployables que nécessaire à son fonctionnement. Les différents panneaux déployables peuvent être articulés chacun au panneau fixe 104a ou même articulés à un autre panneau déployable. Des raccordements flexibles 108 sont prévus au niveau de chaque articulation comprend au moins un canal thermique. L'ensemble de ces canaux permet, au sein d'une même boucle diphasique, la circulation du fluide caloporteur dans chacun des panneaux, fixe et déployable.

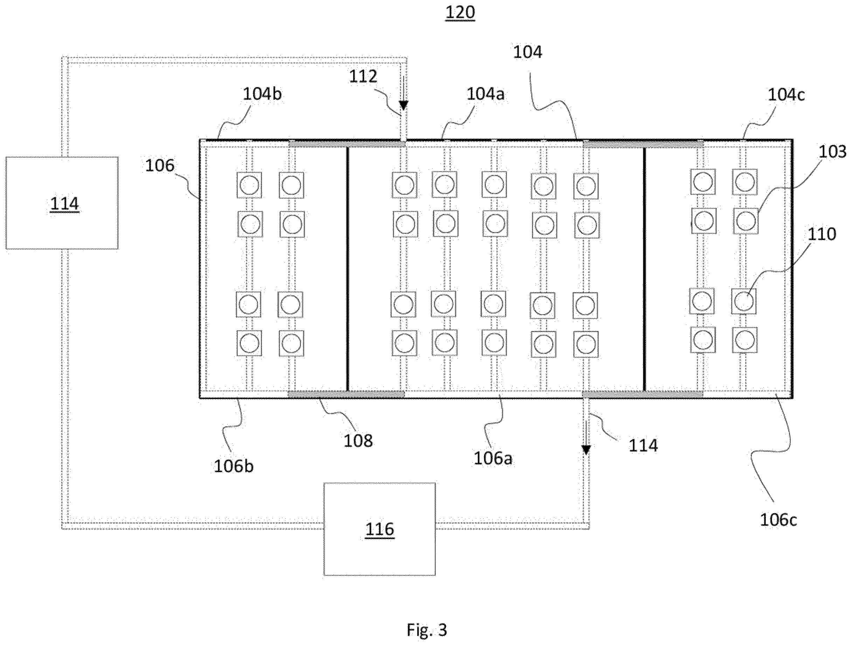

La figure 3 illustre l'antenne rayonnante 120 vu de dessus et avec les panneaux déployables 104b, 104c en position déployée. Dans cet exemple, la boucle diphasique 106 comprend des canaux représentés en traits pointillés permettant au fluide de circuler et de récupérer la chaleur de chacun des éléments rayonnants 110 et l'amplificateur 103 associé. Dans cet exemple, les canaux sont disposés sur la face inférieure de l'antenne rayonnante 120 (c'est-à-dire sur la face de l'embase 104 en contact avec le châssis 102). Il est également possible de disposer les canaux sur la face opposée de l'embase, face sur laquelle sont disposés les éléments rayonnants 110 et les amplificateurs 103. Il est également possible de noyer les canaux dans l'embase 104. Les canaux peuvent circuler le long des bords de l'embase 104 et avantageusement en regard de chacun des éléments rayonnants 110 et amplificateurs 103 afin d'assurer au mieux l'homogénéité de la température sur toute la surface de l'embase 104. Comme illustré dans la figure 3, le fluide circule dans l'antenne rayonnante 120 entre une entrée 112 du fluide et une sortie 114 du fluide.

La boucle diphasique 106 comprend une pompe 114 configurée pour faire circuler le fluide avec un débit supérieur à une valeur prédéterminée et un état diphasique dans chaque panneau 104a, 104b, 104c. La valeur prédéterminée peut dépendre par exemple de la pompe, du fluide, d'une dimension de la boucle diphasique. En particulier, tout type de pompe 114 peut être utilisé pour faire circuler le fluide dans la boucle diphasique 106, et le fluide circulant dans la pompe est à l'état liquide. Cependant, un état diphasique du fluide (qui peut être par exemple de l'ammoniaque) permet de garantir un coefficient d'échange thermique élevé entre le fluide et les éléments rayonnants 110 et/ou amplificateurs 103. Au contraire, lorsque le fluide est à l'état liquide, le coefficient d'échange thermique est faible et la température du fluide augmente lorsqu'il récupère de la chaleur des éléments rayonnants 110 et amplificateurs 103. Ainsi, la boucle diphasique 106 de la présente invention est configurée pour que, lorsque le fluide circule dans la boucle diphasique 106 proche des éléments rayonnants 110 et récupère la chaleur des éléments rayonnants 110, la température du fluide augmente jusqu'à atteindre sa température de saturation. Pour avoir un état diphasique sous chaque panneau 104a, 104b, 104c, plusieurs solutions peuvent être proposées comme l'utilisation de réchauffeurs, la régulation du débit dans les panneaux ou l'utilisation d'un échangeur de chaleur entre une entrée et une sortie des panneaux. Ainsi, en ayant un fluide à l'état diphasique permettant de récupérer la chaleur émise par les éléments rayonnants et les amplificateurs 103, il est possible de récupérer de fortes puissances de dissipations (par exemple, supérieure à 10 kW) avec une température de fluide qui reste constante tant que le fluide est à l'état diphasique. La boucle diphasique permet donc de récupérer la chaleur émise par les éléments rayonnants et les amplificateurs 103, même pour un très grand nombre d'éléments rayonnants (par exemple, des milliers) avec des conditions d'échange constantes et, donc une homogénéité en température des éléments rayonnants (avec un écart de moins de 10°C entre les éléments rayonnants), ce qui est nécessaire pour garantir la performance radiofréquence de l'antenne rayonnante.

Dans un exemple, la boucle diphasique 106 peut comprendre un échangeur de chaleur (non représenté) entre une sortie de la pompe 114 et l'entrée 112 afin d'augmenter la température du fluide jusqu'à sa température de saturation avant d'atteindre les éléments rayonnants 110.

Dans un autre exemple, la boucle diphasique 106 peut comprendre un ou plusieurs capteurs de température permettant de mesurer la température du fluide à un ou plusieurs emplacements et ainsi de vérifier si la température du fluide est bien supérieure à la température de saturation au niveau de l'antenne rayonnante 120. De même, un ou plusieurs capteurs de températures peuvent permettre de s'assurer que la température du fluide est inférieure à la température de saturation avant de circuler dans la pompe (la pompe fonctionnant avec un fluide à l'état liquide.

De plus, la boucle diphasique 106 comprend au moins un condenseur 116 configuré pour évacuer une chaleur du fluide. Dans la figure 3, un condenseur 116 est représenté. Cependant, dans un autre exemple, deux ou plus condenseurs peuvent être utilisés. Par exemple, le condenseur 116 peut être thermiquement lié à un ou plusieurs radiateurs permettant d'évacuer la chaleur des éléments rayonnants 110 et amplificateurs associés récupérée par le fluide vers l'extérieur du satellite 100. Ainsi, le condenseur 116 permet de condenser le fluide caloporteur puis de diminuer la température du fluide en dessous de sa température de saturation afin de retourner à l'état liquide. Le fluide peut donc être à l'état liquide à une sortie du condenseur 116 afin d'être à l'état liquide en circulant dans la pompe 114.

Comme illustré dans la figure 3, dans cet exemple, l'antenne rayonnante 120 comprend deux panneaux déployables 104b, 104c qui sont en position déployée. Les raccordements flexibles 108 permettent de connecter la portion 106a de la boucle diphasique 106 qui est placée sur le panneau fixe 104a avec la portion 106b de la boucle diphasique 106 qui est placée sur le panneau déployable 104b. De même, les raccordements flexibles 108 permettent de connecter la portion 106a de la boucle diphasique 106 qui est placée sur le panneau fixe 104a avec la portion 106b de la boucle diphasique 106 qui est placée sur le panneau déployable 104c..

Dans un exemple, les raccordements flexibles 108 comprennent des canaux configurés pour transmettre des signaux véhiculant une onde électromagnétique émise et/ou reçue par les éléments rayonnants 110. Par exemples les raccordements flexibles 108, en plus de transmettre le fluide à travers la boucle diphasique 106, peuvent transmettre des signaux optiques, électriques, etc. permettant le fonctionnement de l'antenne rayonnante 120.

Il est noté que dans l'exemple illustré dans la figure 3, la pompe est utilisée faire circuler le fluide avec un état diphasique dans chaque panneau 104a, 104b, 104c. Cependant, dans un autre exemple, d'autres systèmes peuvent être utilisés afin de faire circuler le fluide avec un état diphasique dans chaque panneau, comme par exemple un compresseur.

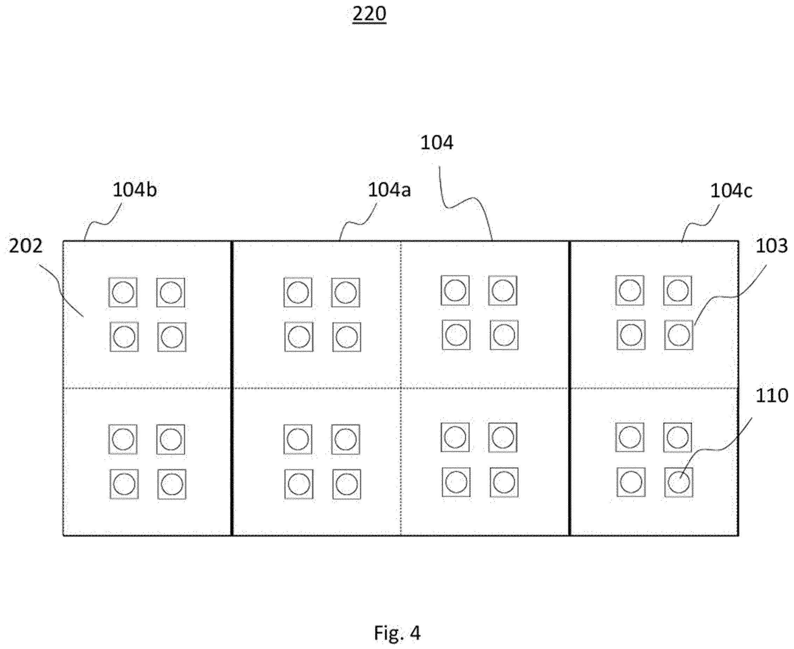

La figure 4 illustre un autre exemple d'antenne rayonnante 220 vu de dessus et avec les panneaux déployables 104b, 104c en position déployée. Dans cet exemple, la boucle diphasique 106 n'est pas représentée. Cependant, la boucle diphasique 106 décrite ci-dessus au regard de la figure 3 peut être utilisée avec l'antenne rayonnante 220. L'antenne rayonnante 220 comprend des tuiles 202 fixée sur l'embase 104. Chaque tuile 202 comprend des éléments rayonnants 110. Chaque tuile 202 est connectée à la ou les tuiles adjacentes de façon à former une antenne rayonnante 220 ayant les fonctionnalités d'une antenne rayonnante formée n'étant pas divisée en différente tuiles. Les tuiles 202 permettent de faciliter la fabrication et l'assemblage des antennes rayonnantes de grandes tailles. Par exemple, l'antenne rayonnante 220 peut avoir une surface allant de 8 m² à 20 m². Ainsi, en utilisant des tuiles 202 permettant de diviser l'antenne rayonnante 220, par exemple, allant de 1 m² à 2.5 m², la fabrication et l'assemblage de l'antenne rayonnante 220 peuvent être facilités.

Bien que l'invention ait été illustrée et décrite en détail à l'aide d'un mode de réalisation préféré, l'invention n'est pas limitée aux exemples divulgués. D'autres variantes peuvent être déduites par l'homme du métier sans sortir du cadre de protection de l'invention revendiquée. Par exemple, dans les exemples décrits ci-dessus, entre 13 et 36 éléments rayonnants ont été représentés. Cependant, dans d'autres exemples, l'antenne rayonnante 120, 220 peut comprendre plusieurs centaines à plusieurs milliers d'éléments rayonnants 110. De plus, l'invention a été illustrée avec deux panneaux déployables. Dans un autre exemple, le satellite peut comprendre seulement un panneau déployable. De plus, dans les exemples représentés ci-dessus, un amplificateur est associé à un élément rayonnant. Cependant, dans un autre exemple, un amplificateur peut être associé à plusieurs éléments rayonnants. De plus, dans les exemples illustrés ci-dessus, les éléments rayonnants et amplificateurs sont montés sur la face supérieure des panneaux et la boucle diphasique est sur la face inférieure des panneaux. Cependant, dans un autre exemple, les éléments rayonnants peuvent être fixés sur la face supérieure des panneaux, les amplificateurs placés sur des plateaux placés à l'intérieur des panneaux, et dont les plans sont orthogonaux aux faces supérieures et inférieures des panneaux.

## Revendications

1. Satellite comprenant :
un châssis (102),
une antenne rayonnante (120) comprenant :
des éléments rayonnants (110) ;
des amplificateurs (103) associés aux éléments rayonnants ;
une embase (104) sur laquelle les éléments rayonnants et les amplificateurs sont montés, l'embase étant configurée pour porter les éléments rayonnants et les amplificateurs et pour évacuer de la chaleur émise par les éléments rayonnants et/ou les amplificateurs (103) lorsqu'ils sont en fonctionnement, l'embase comprenant au moins un panneau fixe (104a) fixé au châssis et au moins un panneau déployable (104b, 104c) articulé au premier panneau, chacun des panneaux portant au moins un des éléments rayonnants et un amplificateur; et
une boucle diphasique (106) dans laquelle circule un fluide et configurée pour récupérer la chaleur et transmise à l'embase, la boucle diphasique comprenant :
deux portions (106a, 106b, 106c), chacune fixée à l'un des deux panneaux de l'embase ; et
des raccordements flexibles (108) comprenant au moins un canal thermique flexible et connectant les portions de la boucle diphasique, le fluide circulant dans le au moins un canal thermique flexible.

2. Satellite selon la revendication 1, dans lequel le panneau déployable est configuré pour avoir une position déployée lorsque le satellite est en service et une position repliée lorsque le satellite est en transport.

3. Satellite selon l'une des revendications précédentes, dans lequel la boucle diphasique comprend une pompe configurée pour faire circuler le fluide avec un débit supérieur à une valeur prédéterminée et un état diphasique dans chaque panneau et au moins un condenseur configuré pour évacuer de la chaleur du fluide.

4. Satellite selon l'une des revendications précédentes, dans lequel l'antenne rayonnante a une surface allant de 8 m² à 20 m².

5. Satellite selon l'une des revendications précédentes, dans lequel le fluide est un fluide caloporteur configuré pour une utilisation à l'état liquide et à l'état diphasique.

6. Satellite selon la revendication 5, dans lequel le fluide caloporteur est de l'ammoniac.

7. Satellite selon l'une des revendications précédentes, dans lequel les raccordements flexibles comprennent des canaux configurés pour transmettre des signaux véhiculant une onde électromagnétique émise et/ou reçue par les éléments rayonnants.

## Patentansprüche

1. Satellit, umfassend:
ein Gestell (102),
eine Strahlungsantenne (120), umfassend:
Strahlungselemente (110);
Verstärker (103), die mit den Strahlungselementen verbunden sind;
einen Sockel (104), auf dem die Strahlungselemente und die Verstärker montiert sind, wobei der Sockel dazu konfiguriert ist, die Strahlungselemente und die Verstärker zu tragen und Wärme, die von den Strahlungselementen und/oder den Verstärkern (103) emittiert wird, wenn diese im Betrieb sind, abzuführen, wobei der Sockel mindestens eine an dem Gestell befestigte ortsfeste Platte (104a) und mindestens eine ausfahrbare Platte (104b, 104c), die an der ersten Platte angelenkt ist, umfasst, wobei jede der Platten mindestens eines der Strahlungselemente und einen Verstärker trägt; und
einen Zweiphasenkreislauf (106), in dem ein Fluid zirkuliert und der dazu konfiguriert ist, die Wärme zurückzugewinnen und an den Sockel übertragen wird, wobei der Zweiphasenkreislauf umfasst:
zwei Teile (106a, 106b, 106c), wobei jeder an einer der zwei Platten des Sockels befestigt ist; und
flexible Verbindungen (108), die mindestens einen flexiblen Wärmekanal umfassen und die Teile des Zweiphasenkreislaufs verbinden, wobei das Fluid in dem mindestens einen flexiblen Wärmekanal zirkuliert.

2. Satellit nach Anspruch 1, wobei die ausfahrbare Platte dazu konfiguriert ist, eine ausgefahrene Position, wenn der Satellit im Betrieb ist, und eine zurückgezogene Position, wenn der Satellit im Transport ist, aufzuweisen.

3. Satellit nach einem der vorhergehenden Ansprüche, wobei der Zweiphasenkreislauf eine Pumpe, die dazu konfiguriert ist, das Fluid mit einem Durchfluss, der höher als ein vorbestimmter Wert ist, zirkulieren zu lassen, und einen Zweiphasenzustand in jeder Platte und mindestens einen Kondensator, der dazu konfiguriert ist, Wärme des Fluids abzuführen, umfasst.

4. Satellit nach einem der vorhergehenden Ansprüche, wobei die Strahlungsantenne eine Oberfläche aufweist, die von 8 m² bis 20 m² reicht.

5. Satellit nach einem der vorhergehenden Ansprüche, wobei das Fluid ein Kühlmittel ist, das zu einer Nutzung im flüssigen Zustand und im Zweiphasenzustand konfiguriert ist.

6. Satellit nach Anspruch 5, wobei das Kühlmittel Ammoniak ist.

7. Satellit nach einem der vorhergehenden Ansprüche, wobei die flexiblen Verbindungen Kanäle umfassen, die dazu konfiguriert sind, Signale zu übertragen, die eine elektromagnetische Welle tragen, die von den Strahlungselementen emittiert und/oder empfangen wird.

## Claims

1. A satellite comprising:
a chassis (102);
a radiating antenna (120) comprising:
radiating elements (110);
amplifiers (103) associated with the radiating elements;
a base (104), on which the radiating elements and the amplifiers are mounted, the base being configured to support the radiating elements and the amplifiers and to discharge heat emitted by the radiating elements and/or the amplifiers (103) while they are operating, the base comprising at least one fixed panel (104a) fixed to the chassis and at least one deployable panel (104b, 104c) hinged to the first panel, each of the panels supporting at least one of the radiating elements and an amplifier; and
a two-phase loop (106), in which a fluid circulates and which is configured to recover the heat and transferred to the base, the two-phase loop comprising:
two portions (106a, 106b, 106c), each fixed to one of the two panels of the base; and
flexible connections (108) comprising at least one flexible thermal channel and connecting the portions of the two-phase loop, with the fluid circulating in the at least one flexible thermal channel.

2. The satellite according to claim 1, wherein the deployable panel is configured to assume a deployed position when the satellite is in service and a stowed position when the satellite is transported.

3. The satellite according to any of the preceding claims, wherein the two-phase loop comprises a pump configured to circulate the fluid with a flow rate that is greater than a predetermined value and a two-phase state in each panel and at least one condenser configured to discharge heat from the fluid.

4. The satellite according to any of the preceding claims, wherein the radiating antenna has a surface area ranging from 8 m² to 20 m².

5. The satellite according to any of the preceding claims, wherein the fluid is a heat transfer fluid configured to be used in the liquid state and in the two-phase state.

6. The satellite according to claim 5, wherein the heat transfer fluid is ammonia.

7. The satellite according to any of the preceding claims, wherein the flexible connections comprise channels configured to transmit signals conveying an electromagnetic wave emitted and/or received by the radiating elements.
